Europäisches Patentamt

European Patent Office

Office européen des brevets

(19)

(11) **EP 0 852 906 B1**

(12) **EUROPÄISCHE PATENTSCHRIFT**

(45) Veröffentlichungstag und Bekanntmachung des Hinweises auf die Patenterteilung:
**30.10.2002 Patentblatt 2002/44**

(51) Int Cl.[7]: **A01J 11/16**, B01F 5/06

(21) Anmeldenummer: **98100052.4**

(22) Anmeldetag: **03.01.1998**

(54) **Verfahren und Vorrichtung zum Homogenisieren von Milch**

Method and device for homogenization of milk

Méthode et dispositif d'homogénéisation du lait

(84) Benannte Vertragsstaaten:
**AT CH DE FR GB IT LI NL**

(30) Priorität: **13.01.1997 DE 19700810**

(43) Veröffentlichungstag der Anmeldung:
**15.07.1998 Patentblatt 1998/29**

(73) Patentinhaber: **Haarmann & Reimer GmbH**
**37603 Holzminden (DE)**

(72) Erfinder: **Klinksiek, Bernd**
**51429 Bergisch Gladbach (DE)**

(74) Vertreter: **Zobel, Manfred, Dr.**
**Bayer AG**
**Bayer Chemicals**
**Legal & Patents**
**Patents and Licensing**
**51368 Leverkusen (DE)**

(56) Entgegenhaltungen:
**EP-A- 0 034 675**          **EP-A- 0 101 007**
**US-A- 5 409 672**

**Beschreibung**

Die Erfindung betrifft ein schonendes Verfahren zum Homogenisieren von fetthaltigen flüssigen Naturprodukten, insbesondere zum Homogenisieren von Milchoder Sahneprodukten, z.B. von Kuhmilch, Schafsmilch, oder Ziegenmilch, mit einem Fettgehalt von bis zu 50 Gew.%.

Die Homogenisierung von Kuhmilch ist in zahlreichen Veröffentlichungen und Dissertationen beschrieben. Einen umfangreichen Überblick über den Stand der Technik auf diesem Gebiet gibt die Arbeit von H. Eibel, Untersuchung zur Hochdruckhomogenisation von Sahne mit verschiedenen Fettgehaltsstufen, Fortschr.-Ber. VDI Reihe 3 Nr. 136, Düsseldorf, VDI-Verlag 1987.

In der Homogenisiertechnik für Wasser/Öl oder Öl/Wasser-Emulsionen finden ganz allgemein verschiedene Homogenisierverfahren Verwendung, die in Abhängigkeit vom technischen Anwendungsbereich ausgewählt werden.

So ist für die Herstellung von Pharmazeutischen Öl-in-Wasser-Emulsionen ein Zweistufen-Verfahren aus der Offenlegungsschrift EP 101007 A2 bekannt, bei dem eine vordispergierte Voremulsion aus Öl und Wasser unter Phasenumkehr in einer Dispergierdüse bei einem Druck von 2 bar bis 50 bar fein dispergiert wird.

Die Auswahl und der Vergleich von geeigneten Dispergiermaschinen zur Dispersionsherstellung wird in zahlreichen Veröffentlichungen beschrieben, wie z.B. von Walstra, P. Formation of Emulsions, in: Becher,P: Encyclopedia of Emulsion Technology, Vol, 1, New York, Basel: Dekker, 1983.

Übereinstimmend wird beschrieben, daß die Auswahl von Dispergiermaschinen nach der Größe der volumenbezogenen Leistung erfolgt. Zur Herstellung von feinteiligen Emulsionen kleiner 1 μm sind Dispergiermaschinen mit hohen volumenbezogenen Leistungen erforderlich, wie z.B. Hochdruckhomogenisatoren.

Mit Rotor/Stator-Maschinen lassen sich so feinteilige Emulsionen nicht mehr herstellen.

In dem obengenannten VDI Bericht von H. Eibel wird unter anderem beschrieben, daß beim Homogenisieren von Milch, insbesondere Kuhmilch, aus Gründen der Lagerstabilität die Phasengrenzfläche zwischen Fett und Wasser um den Faktor 3 - 10 vergrößert und der mittlere Partikeldurchmesser der Fettpartikeln dabei entsprechend auf eine Partikelgröße von kleiner 1 μm reduziert werden muß. Da Milch ein Naturprodukt ist, also nicht, wie bei technischen Emulsionen, standardisiert ist, wird zur Zerkleinerung der Fettpartikeln eine Homogenisiervorrichtung benötigt, die diesen Verfahrensschritt besonders schonend durchführt, gleichzeitig aber auch unempfindlich ist gegenüber Schwankungen der Zusammensetzung.

Die durch das Homogenisieren vergrößerte Grenzfläche muß anschließend wieder durch die Emulgatormembran stabilisiert werden, die bei der Milch aus einem Gemisch von Phospholipiden und Proteinen besteht. Die erforderliche Membrandicke wird in der Literatur mit einer Dicke von ca. 10 nm und einer Beladung von 10 mg/m$^2$ beschrieben.

Besondere Probleme bereitet die Homogenisierung von Sahneprodukten mit hohen Anteilen an Fettphase aufgrund der variierenden Massenverhältnissen von Fett und Emulgator.

In dem genannten VDI Bericht von H. Eibel wird zur Lösung dieser Probleme vorgeschlagen die Homogenisierung von Milch oder insbesondere von Sahne mit verschiedenem Fettgehalt in einem Hochdruckhomogenisator durchzuführen, der in seiner Eingangsstufe mit einem Druck von oberhalb 100 bar betrieben wird. Milchprodukte und verwandte Erzeugnisse werden daher üblicherweise mit Hochdruckhomogenisatoren homogenisiert.

Eine weitere Aufgabenstellung ergibt sich durch den Konzentrationsprozeß bei Molkereibetrieben, der eine Verarbeitung immer größerer Milchmengen nach sich zieht. Die erforderliche Durchflußmenge an Milch, die durch einen einzelnen Hochdruckhomogenisator verarbeitet werden soll, ist im Laufe der Zeit weiter spürbar angestiegen. Betrachtet man das Ventil eines bekannten Hochdruckhomogenisators, so wächst mit steigendem Durchsatz die Spaltbreite des Homogenisatorventils. Bei gleichem Homogenisierdruck resultieren dann auf Grund der höheren Spaltbreite des Hochdruckhomogenisators nur gröbere Emulsionen mit großem Fettpartikeldurchmesser. Um die gleiche Partikelgröße wie bei Hochdruckhomogenisatoren mit kleinerem Durchsatz zu erreichen ist daher ein höherer Betriebsdruck erforderlich.

In der Offenlegungsschrift EP 34675 A2 wird ein Ausweg durch die Parallelschaltung mehrerer Ventile in einem Hochdruckhomogenisator gefunden.

Da die Ventilspalte des Hochdruckhomogenisators dann kleiner gestaltet sind, kann der Hochdruckhomogenisator auch bei etwas niedrigerem Druck betrieben werden, der dem Druck entspricht der bei Hochdruckhomogenisatoren mit mittlerem Durchsatz angewendet wird.

Aufgabe der Erfindung ist es ein Homogenisierverfahren bereitzustellen, das die Nachteile der bekannten Verfahren nicht zeigt und das insbesondere zur wirtschaftlichen Homogenisierung bei möglichst niedrigem Homogenisierdruck und bei gleichzeitig hohem Durchsatz bzw. Volumenstrom arbeitet.

Die Aufgabe wird erfindungsgemäß gelöst durch ein Verfahren zum Homogenisieren von fetthaltigen flüssigen wäßrigen Naturprodukten, insbesondere zum Homogenisieren von Milch- oder Sahneprodukten, insbesondere von Kuhmilch, Schafsmilch, oder Ziegenmilch, mit einem Fettgehalt von bis zu 50 Gew.-%, wobei man die fetthaltige Flüssigkeit bei einem Druck von 10 bis 100 bar und einem Durchsatz von bis zu 100 m$^3$/h durch eine ein- oder mehrstufige Düsendispergiervorrichtung, die ≥ 50 Düsenbohrungen aufweist, treibt, dadurch gekennzeichnet, dass die Düsenbohrungen einen hydraulischen Durchmesser von 0,1 bis 1 mm aufweisen und die Durchflussgeschwindigkeit im Bereich jeder Düsenbohrung von 10 bis 200 m/s beträgt.

Eine bevorzugte Ausführungsform der Erfindung ist dadurch gekennzeichnet, dass man die fetthaltige Flüssigkeit bei einem Druck von 20 bis 80 bar durch die Düsendispergiervorrichtung treibt.

Eine weitere bevorzugte Ausfuhrungsform der Erfindung ist dadurch gekennzeichnet, dass die Düsendispergiervorrichtung ≥ 100 Düsenbohrungen aufweist.

Eine weitere bevorzugte Ausführungsform der Erfindung ist dadurch gekennzeichnet, dass die Düsenbohrungen einen hydraulischen Durchmesser von 0,2 bis 0,7 mm aufweisen.

In einer Variante des erfindungsgemäßen Verfahrens wird die zu homogenisierende Flüssigkeit durch Düsenbohrungen getrieben, die so gestaltet sind, daß das Produkt aus der hydraulischen Querschnittsfläche $F_h$ der Düsenbohrung und ihrer Länge L der Beziehung:

$$F_h * L = d^3$$

gehorcht, in der d der hydraulische Durchmesser der Düsenbohrung ist.

Um Koaleszenz und Aggregation von Fettpartikeln in der Flüssigkeit zu verhindern, werden zwei- oder mehrstufige Düsendispergiervorrichtungen im erfindungsgemäßen Verfahren bevorzugt eingesetzt, wobei die Verteilung des Druckgefälles auf die jeweiligen Stufen bedarfsgerecht optimiert wird.

Ein zweifaches und mehrfaches Homogenisieren der zu homogenisierenden Flüssigkeit mit einer Entspannung zwischen den Homogenisierschritten ist ggf. als Variante auch möglich. Durch mehrfaches Homogenisieren werden bevorzugte enge Partikelgrößenverteilungen erreicht. Wünschenswert sind im Falle von Milchprodukten lagerstabile Milchprodukte mit möglichst grober mittlerer Teilchengröße bei enger Verteilung. Der vorliegenden Erfindung liegt demnach die weiterführende Idee zugrunde, daß engere Partikelgrößenverteilungen von Milch oder Milchprodukten durch Hintereinanderschaltung eines weiteren oder mehrerer Düsendispergatoren erreicht werden können. Durch die jeweilige Anzahl der Bohrungen der Düsendispergatoren kann der Druckabfall in jeder Dispergierstufe gleich oder auch unterschiedlich eingestellt werden. Dadurch kann insbesondere eine optimale Anpassung an die Grenzflächenbelegungskinetik der Emulgatormembran für die Stabilisierung der Fetttröpfchen erreicht werden. Die Koaleszenz und Aggregation der Fettpartikel wird vermieden.

Die Temperaturerhöhung der fetthaltigen Flüssigkeit beträgt beim bevorzugten Verfahren höchstens 3°C, insbesondere höchstens 1,5°C. Die Verarbeitungstemperatur sollte vorzugsweise von 55 bis 80°C, insbesondere von 60 bis 70°C betragen.

Die genaue optimale Verarbeitungstemperatur wird dabei in Abhängigkeit vom Fettgehalt der Flüssigkeit ermittelt.

Als besonders vorteilhaft erweist es sich, wenn das Verfahren durch Auswahl der Betriebsbedingungen des Düsendispergators z.B. durch entsprechende Einstellung des Differenzdrucks zwischen dem Raum vor den Düsenöffnungen und hinter den Düsenöffnungen und/oder Wahl der Länge der Düsenöffnung und ihren hydraulischen Durchmesser so gestaltet wird, daß die volumenbezogene Energiedichte, die im Bereich der Düsenöffnungen in die Flüssigkeit eingebracht wird, von $10^6$ bis $10^8$ J/m$^3$, bevorzugt von $10^7$ bis $10^8$ J/m$^3$ beträgt. Oberhalb von $10^8$ J/m$^3$ können auf Grund von thermisch induziertem Abbau insbesondere bei Milch spürbare geschmackliche Veränderungen auftreten, während weiter unterhalb von $10^6$ J/m$^3$ unter Umständen instabile Emulsionen oder unzureichende Homogenisierung resultieren.

Die mit dem Verfahren bevorzugt erhältlichen homogenisierten fetthaltigen Flüssigkeiten weisen zu 90 % der Teilchen einen volumenbezogenen Teilchendurchmesser im Bereich von 0,1 bis 1 μm, insbesondere von 0,3 bis 1 μm, auf.

Verwendet wird im erfindungsgemäßen Verfahren eine ein- oder mehrstufige Düsendispergiervorrichtung zur Homogenisierung von fetthaltigen flüssigen Naturprodukten oder Nahrungsmitteln, insbesondere zum Homogenisieren von Milch- oder Sahneprodukten, insbesondere von Kuhmilch, Schafsmilch, oder Ziegenmilch, mit einem Fettgehalt von bis zu 50 Gew.% und mehr, bestehend aus einer Fördereinheit zum Fördern der zu homogenisierenden Flüssigkeit, einer Vordruckkammer, einer oder mehrerer in Reihe geschalteter Niederdruckkammern und einer Vielzahl von Dispergieröffnungen, über die die Vordruckkammer und die Niederdruckkammern miteinander verbunden sind, wobei die Fördereinheit einen definierten Vordruck in der Vordruckkammer erzeugt, dadurch gekennzeichnet, daß die Düsenbohrungen der Dispergieröffnungen einen hydraulischen Durchmesser von 0,1 bis 1 mm, bevorzugt von 0,2 bis 0,7 mm aufweisen und so gestaltet sind, daß das Produkt aus der hydraulischen Querschnittsfläche $F_h$ der Düsenbohrungen und ihrer Länge L der Beziehung:

$$F_h * L = d^3$$

gehorcht, in der d der hydraulische Durchmesser der Düsenbohrungen ist.

Insbesondere weisen die Düsenbohrungen einen hydraulischen Durchmesser von 0,1 bis 1 mm, bevorzugt von 0,2 bis 0,7 mm auf. Die Düsenbohrungen können beliebig geformte Querschnittsflächen d.h. z.B. rechteckige, quadratische oder runde Querschnittsflächen aufweisen.

Die Stufen der Dispergiervorrichtung werden wenigstens gebildet durch die Vordruckkammer und eine Niederdruckkammer oder durch zwei benachbarte Niederdruckkammern und die diese Kammern verbindenden Dispergieröffnungen.

Die Gesamtquerschnittsfläche aller Düsenbohrungen in einer Stufe beträgt insbesondere wenigstens 10 mm². Hierdurch wird es möglich einen Mengendurchsatz von homogenisierter fetthaltiger Flüssigkeit von bis zu 100 m³/h und mehr zu erreichen.

In einer Stufe liegen insbesondere eine Zahl n größer oder gleich 50, bevorzugt größer oder gleich 100, besonders bevorzugt größer oder gleich 150 Düsenbohrungen über die Kammerwand verteilt vor. Diese sind bevorzugt in einem oder in mehreren Düsenkörpern 5 zusammengefaßt.

Mit Hilfe der speziellen Düsendispergiervorrichtung, die einen wesentlich höheren Wirkungsgrad (bzw. eine höhere Energiedichte) als konventionelle Hochdruckhomogenisatoren hat, ist es möglich schon bei vergleichbar viel niedrigerem Düsenvordruck feinteilige Fettpartikel mit enger Partikelgrößenverteilung zu erreichen. Z.B. werden schon bei 50 bar Homogenisierdruck Emulsionen gleicher Partikelgrößenverteilung erreicht, die mit einem Hochdruckhomogenisator bei einem Vordruck von 200 bar erzeugt werden.

Mit dieser Düsendispergiervorrichtung lassen sich besonders vorteilhaft feinteilige Dispersionen, sowohl kontinuierlich als auch diskontinuierlich herstellen. Erreichbar sind ferner Emulsionen definierter Partikelgröße und enger Verteilung. Durch den niedrigen Energieaufwand erfolgt die Emulgierung schonend. Die beim erfindungsgemäßen Verfahren auftretende Temperaturerhöhung ist vergleichsweise niedrig im Verhältnis zu der Temperaturerhöhung bei bekannten Dispergierverfahren mit Hochdruckhomogenisierern. Dies ist für die Bearbeitung der Naturprodukte wie Milch oder Sahne von besonderem Vorteil, da sich thermische Belastungen empfindlich auf den Geschmack solcher Produkte auswirken.

Möglich ist auch die Verwendung der Düsendispergiervorrichtung zur Homogenisierung fetthaltiger flüssiger Naturprodukte oder Nahrungsmittel, insbesondere zur Homogenisierung von Milch, bevorzugt von Säugetieren oder von Milch auf Basis von natürlichen Ölen wie Sojaöl, wobei in der homogenisierten Flüssigkeit bis zu 90 % der dispergierten Teilchen in der Flüssigkeit einen volumenbezogenen Teilchendurchmesser im Bereich von 0,1 bis 1 μm, insbesondere von 0,3 bis 1 μm, aufweisen.

Die Erfindung wird nachstehend anhand der Figuren beispielhaft näher erläutert ohne die Erfindung im Einzelnen einzuschränken.

In den Figuren zeigen:

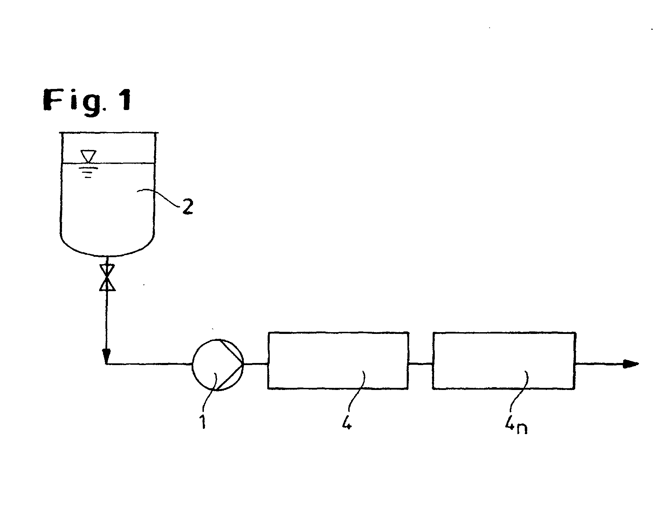

Figur 1    den Längsschnitt durch eine einstufige Ausführungsform der Düsendispergiervorrichtung

Figur 2    einen Querschnitt durch die Düsendispergiervorrichtung entsprechend Fig. 1

Figur 3    den Längsschnitt durch eine fünfstufige Variante der Düsendispergiervorrichtung

Figur 4    ein Diagramm zur Erläuterung der Homogenisiereigenschaften einer Düsendispergiervorrichtung im Vergleich mit der Kennlinie eines Hochdruckhomogenisators am Beispiel einer Modellemulsion

**Beispiele**

**Beispiel 1**

Am Beispiel der Modellemulsion Paraffinöl (45 Gewichtsteile) in Wasser (50 Gewichtsteile) mit Tween 80/Arlacel 80, HLB 11,5 (5 Gewichtsteile) als Emulgatoren wird die Wirkungsweise des erfindungsgemäßen Verfahrens demonstriert. Die Modellemulsion wurde zunächst bewußt gewählt um die Reproduzierbarkeit der Ergebnisse gegenüber einer Verwendung von beispielsweise Rohmilch sicherzustellen.

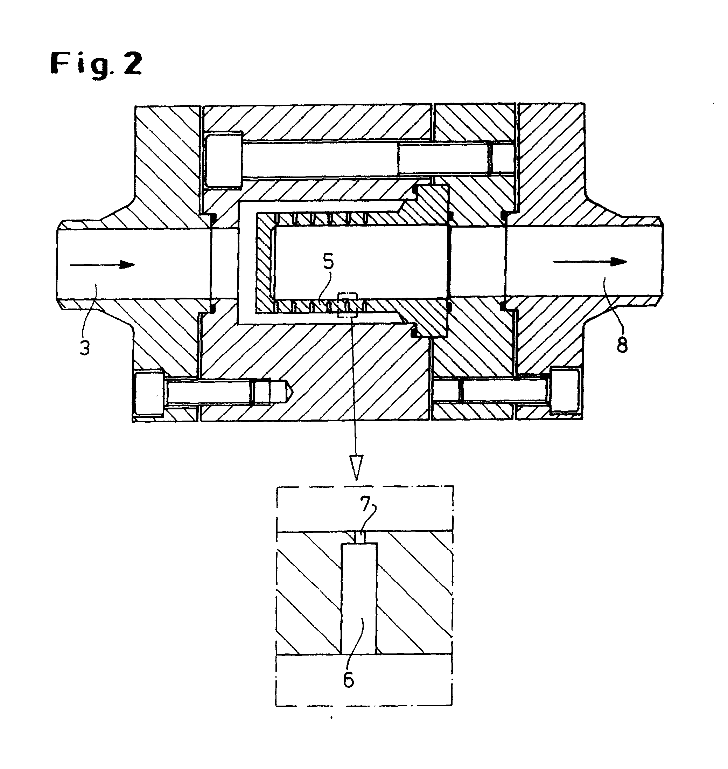

Es wurde eine Düsendispergiervorrichtung nach Fig. 2 mit einer einstufigen Dispergiereinheit 4 verwendet. Als Fördereinheit 1 wurde eine 3-stufige Kolbenpumpe verwendet. die parallelgeschalteten Dispergieröffnungen 6, 7 hatten Bohrungen 7 mit einem runden Querschnitt mit einem Durchmesser von 0,5 mm bei einer Länge von 0,75 mm.

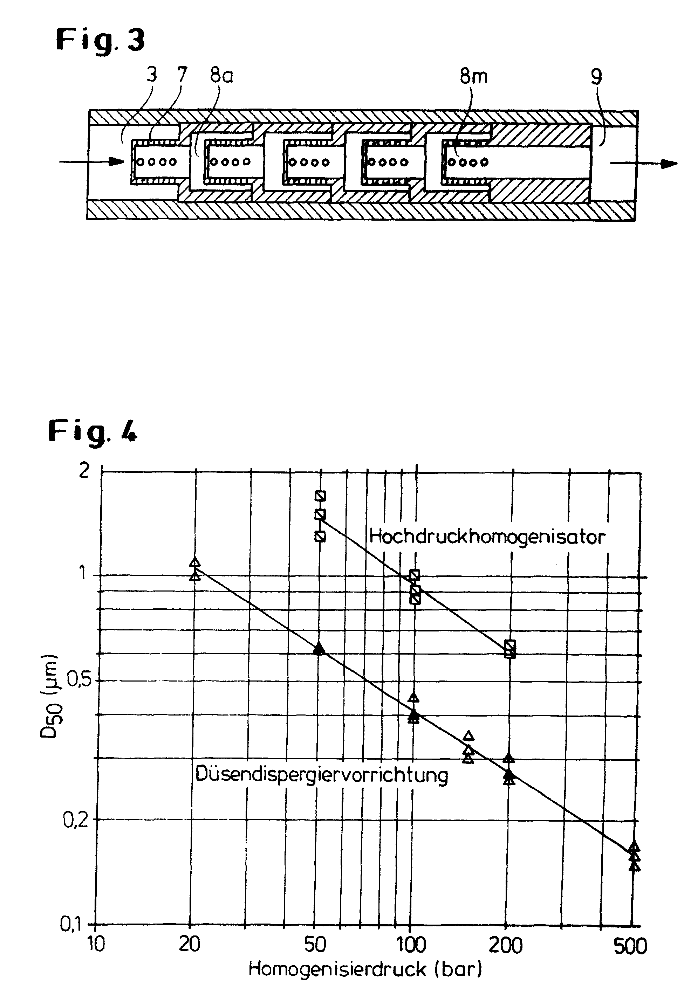

Fig. 3 stellt den Längsschnitt durch eine fünfstufige Variante der Düsendispergiervorrichtung dar mit der Vordruckkammer 3, den Dispergieröffnungen 7, den Niederdruckkammern 8a bis 8m und dem Auslauf 9. Der Druckabfall bzw. Homogenisierdruck ist bei gleicher Anzahl von Dispergieröffnungen 6, 7 und gleichem hydraulischen Durchmesser in jeder Stufe gleich. Durch Variation der Anzahl der Öffnungen oder der Größe des hydraulischen Durchmessers können in den Stufen unterschiedliche Drücke eingestellt werden.

Fig. 4 zeigt ein Diagramm zur Erläuterung der Homogenisiereigenschaften der Düsendispergiervorrichtung, im Vergleich mit der Kennlinie eines bekannten Hochdruckhomogenisators (vergleiche VDI-Bericht, Reihe 3, Nr. 136, S. 50 Abb. 3.4) am Beispiel einer Modellemulsion. Das Diagramm zeigt, daß mit der Vorrichtung schon bei 50 bar die gleiche Partikelfeinheit erreicht wird, die mit dem Hochdruckhomogenisator erst bei einem Druck von 200 bar erhalten wird.

Für einen Durchsatz von 10 m³/h und bei einem Homogenisierdruck von 50 bar waren z.B. in der Dispergiereinheit nach Fig. 2 200 Bohrungen parallel angeordnet. Das Problem der größeren Spaltbreiten von Hochdruckhomogenisierventilen bei höheren Durchsätzen ist damit nicht gegeben. Zum anderen lassen sich die Mehrfachdüsen leicht und preiswert fertigen.

Die Temperaturerhöhung beim Homogenisieren ist deutlich erniedrigt, z.B 1,2°C bei 50 bar, mit der Niederdruckhomogenisiervorrichtung, statt 4,8°C bei 200 bar Homogenisierdruck in dem bekannten Hochdruckhomogenisierventil.

**Vergleichsbeispiel 2** (konventioneller Hochdruckhomogenisator)

Eine auf 3,5 % Fettgehalt eingestellte Kuhmilch wurde mit einem Hochdruckhomogenisator der Firma APV-Homogeniser, Lübeck, bei einer Temperatur von 70°C und mit einen Volumenstrom von 5 m³/h homogenisiert. Das Homogenisierventil war ein typisches 2-stufiges Homogenisierventil zum Homogenisieren von Milch (siehe auch Abb. 3.6, Eibel, Untersuchung zur Hochdruckhomogenisation, Fortschr.-Ber. VDI Reihe 3 Nr. 136, Düsseldorf VDI-Verlag 1987). Das 2-stufige Homogenisierventil wurde unter einem Gesamtdruck von 145 bar betrieben, wobei 10 % des Druckes in der 2. Stufe abgebaut wurde. Die Pumpe des Hochdruckhomogenisators war eine 3-fach-Kolbenpumpe.

Die Temperaturerhöhung der aus dem Homogenisator auslaufenden Milch betrug 3,5°C.

Die mittlere Partikelgröße der Fettröpfchen der Milch, gemessen durch Laserkorrelationsspektroskopie, betrug 0,37 μm. Unter dem Lichtmikroskop wurden keine Grobpartikeln mit einer mittleren Partikelgröße > 4 μm festgestellt.

**Vergleichsbeispiel 3**

Es wurde Milch unter den gleichen Verfahrensbedingungen wie in Vergleichsbeispiel 2 homogenisiert, allerdings wurde der Druck auf einen Gesamtdruck von 120 bar erniedrigt.

Die Temperaturerhöhung der aus dem Homogenisator auslaufenden Milch betrug unter diesen Bedingungen 2,9°C.

Die Partikelgröße, gemessen durch Laserkorrelationsspektroskopie betrug 0,38 μm. Unter dem Mikroskop wurden keine Grobpartikeln > 4 μm festgestellt.

Die Betriebsweise bei noch niedrigerem Gesamtdruck führte zu grobteiligen instabilen Emulsionen, so daß die genannten hohen Betriebsdrucke gewählt werden mußten.

**Beispiel 4** (Erfindungsgemäßes Verfahren)

Aus der in den Vergleichsbeispielen 2 und 3 verwendeten Homogenisiervorrichtung wurde das 2-stufige Hochdruckhomogenisierventil ausgebaut und statt dessen ein Strahldispergator mit einer Geometrie entsprechend Fig. 2 mit 110 Bohrungen eingebaut. Die Bohrungen des Strahldispergators hatten Durchmesser von je 0,5 mm, bei einer Länge der Bohrungen von 0,75 mm.

Bei dem Durchsatz der 3-fach-Kolbenpumpe des Homogenisators von 5 m³/h ergab sich ein Homogenisierdruck von 50 bar. Die Emulgiertemperatur lag ebenfalls bei 70°C.

Die Temperaturerhöhung der aus dem Homogenisator auslaufenden Milch betrug unter diesen Bedingungen 1,1°C.

Die mittlere Partikelgröße der Milch, gemessen durch Laserkorrelationsspektroskopie, betrug 0,37 μm. Unter dem Mikroskop wurden keine Grobpartikeln mit einer mittleren Partikelgröße > 4μm festgestellt.

**Beispiel 5** (erfindungsgemäß)

Es wurde unter den gleichen Verfahrensbedingungen wie in Beispiel 4 gearbeitet. Im Unterschied zu Beispiel 4 wurden jedoch zwei Strahldispergatoren mit einer Geometrie entsprechend Fig. 3 hintereinander geschaltet. Der erste Strahldispergator hatte 120 Bohrungen mit einem Durchmesser der Bohrungen von je 0,6 mm und einer Länge von 0,9 mm. Der zweite Strahldispergator hatte 120 Bohrungen mit einem Durchmesser der Bohrungen von je 0,7 mm und einer Länge von 1,05 mm.

Bei dem Durchsatz von 5 m³/h ergab sich ein Gesamthomogenisierdruck von 20 bar. Die Emulgiertemperatur lag ebenfalls bei 70°C.

Die Temperaturerhöhung der aus dem Homogenisator auslaufenden Milch betrug unter diesen Bedingungen nur 0,5°C

Die mittlere Partikelgröße der Milch, gemessen durch Laserkorrelationsspektroskopie, betrug 0,38 μm. Unter dem Mikroskop wurden keine Grobpartikeln mit einer mittleren Partikelgröße > 4μm festgestellt.

Ein Vergleich der erfindungsgemäßen Beispiele mit den Vergleichsbeispielen zeigt, daß es möglich ist, bei deutlich schonenderen Bedingungen (niedrigere Temperaturerhöhung) mit einem drastisch niedrigeren Homogenisierdruck zu einer vergleichbaren Emulgierqualität der Milch zu gelangen. Die Erniedrigung des Homogenisierdrucks entspricht zudem einer Verminderung des Energieeinsatzes um mehr als 50 %. Damit können die Betriebskosten für die Homogenisierung erheblich vermindert werden.

**Patentansprüche**

1. Verfahren zum Homogenisieren von fetthaltigen flüssigen wässrigen Naturprodukten mit einem Fettgehalt von bis zu 50 Gew.-%, wobei man die fetthaltige Flüssigkeit bei einem Druck von 10 bis 100 bar und einem Durchsatz von bis zu 100 m³/h durch eine ein- oder mehrstufige Düsendispergiervorrichtung, die größer oder gleich 50 Düsenbohrungen aufweist, treibt, **dadurch gekennzeichnet, dass** die Düsenbohrungen einen hydraulischen Durchmesser von 0,1 bis 1 mm aufweisen und die Durchflussgeschwindigkeit im Bereich jeder Düsenbohrung von 10 bis 200 m/s beträgt.

**2.** Verfahren nach Anspruch 1, **dadurch gekennzeichnet, dass** es zum Homogenisieren von Milch- oder Sahneprodukten eingesetzt wird.

**3.** Verfahren nach Anspruch 1, **dadurch gekennzeichnet, dass** man die fetthaltige Flüssigkeit bei einem Druck von 20 bis 80 bar durch die Düsendispergiervorrichtung treibt.

**4.** Verfahren nach Anspruch 1, **dadurch gekennzeichnet, dass** die Düsendispergiervorrichtung $\geq$ 100 Düsenbohrungen aufweist.

**5.** Verfahren nach Anspruch 1, **dadurch gekennzeichnet, dass** die Düsenbohrungen einen hydraulischen Durchmesser von 0,2 bis 0,7 mm aufweisen.

**6.** Verfahren nach Anspruch 1, **dadurch gekennzeichnet, dass** die Temperaturerhöhung der fetthaltigen Flüssigkeit beim Homogenisieren höchstens 3°C beträgt.

**7.** Verfahren nach Anspruch 1, **dadurch gekennzeichnet, dass** die Verarbeitungstemperatur weniger als 80°C beträgt.

**8.** Verfahren nach Anspruch 1, **dadurch gekennzeichnet, dass** die volumenbezogene Energiedichte, die im Bereich der Düsenöffnungen in die Flüssigkeit eingebracht wird, $10^6$ bis $10^8$ J/m$^3$ beträgt.

**Claims**

**1.** A process for homogenising fatty liquid aqueous natural products with a fat content of up to 50 wt.%, wherein the fatty liquid is driven at a pressure of 10 to 100 bar and a throughput of up to 100 m$^3$/h through a single- or multi-stage nozzle dispersing device, which has greater than or equal to 50 nozzle bores, **characterised in that** the nozzle bores have a hydraulic diameter of 0.1 to 1 mm and the flow velocity in the region of each nozzle bore is 10 to 200 m/s.

**2.** A process according to claim 1, **characterised in that** it is used for homogenising milk or cream products.

**3.** A process according to claim 1, **characterised in that** the fatty liquid is driven through the nozzle dispersing device at a pressure of 20 to 80 bar.

**4.** A process according to claim 1, **characterised in that** the nozzle dispersing device has $\geq$ 100 nozzle bores.

**5.** A process according to claim 1, **characterised in that** the nozzle bores have a hydraulic diameter of 0.2 to 0.7 mm.

**6.** A process according to claim 1, **characterised in that** the increase in temperature of the fatty liquid on homogenisation is at most 3°C.

**7.** A process according to claim 1, **characterised in that** the processing temperature is less than 80°C.

**8.** A process according to claim 1, **characterised in that** the energy density per unit volume which is introduced into the liquid in the region of the nozzle openings is $10^6$ to $10^8$ J/m$^3$.

**Revendications**

**1.** Procédé d'homogénéisation de produits naturels aqueux liquides contenant des matières grasses, présentant une teneur en matières grasses de jusqu'à 50 % en poids, dans lequel on chasse le liquide à une pression de 10 à 100 bar et avec un débit allant jusqu'à 100 m$^3$/h à travers un dispositif de dispersion à buses à un ou à plusieurs étages qui présente 50 perçages de buse ou plus, **caractérisé en ce que** les perçages de buse présentent un diamètre hydraulique de 0,1 à 1 mm et **en ce que** la vitesse d'écoulement au niveau de chaque perçage de buse est de 10 à 200 m/s.

**2.** Procédé selon la revendication 1, **caractérisé en ce qu'**on l'utilise pour l'homogénéisation de produits laitiers ou crémeux.

**3.** Procédé selon la revendication 1, **caractérisé en ce que** l'on chasse le liquide à une pression de 20 à 80 bar à travers le dispositif de dispersion à buses.

**4.** Procédé selon la revendication 1, **caractérisé en ce que** le dispositif à de dispersion à buses comprend $\geq$ 100 perçages de buse.

**5.** Procédé selon la revendication 1, **caractérisé en ce que** les perçages de buse présentent un diamètre hydraulique de 0,2 à 0,7 mm.

**6.** Procédé selon la revendication 1, **caractérisé en ce que** l'augmentation de température du liquide pendant l'homogénéisation est au maximum de 3°C.

**7.** Procédé selon la revendication 1, **caractérisé en ce que** la température de traitement est inférieure à 80°C.

8. Procédé selon la revendication 1, **caractérisé en ce que** la densité énergétique relative au volume qui est apportée dans le liquide au niveau des ouvertures de buse est de $10^6$ à $10^8$ J/m$^3$.

# Fig. 1

# Fig. 2

# Fig. 3

# Fig. 4